# EUROPEAN PATENT SPECIFICATION

(11) **EP 3 982 440 B1**
(45) Date of publication and mention of the grant of the patent: **28.08.2024**
(21) Application number: 20871007.9
(22) Date of filing: 28.09.2020
(51) Int. Cl.: H01M 4/13, H01M 4/62, H01M 10/052, H01M 4/131, H01M 4/02

(54) **ELECTRODE AND SECONDARY BATTERY COMPRISING SAME**
ELEKTRODE UND SEKUNDÄRBATTERIE DAMIT
ÉLECTRODE ET BATTERIE SECONDAIRE LA COMPRENANT

(30) Priority: 04.10.2019 KR 20190123301
(43) Date of publication of application: 13.04.2022
(60) Divisional application: 24189143.1
(73) Proprietor: LG Energy Solution, Ltd., Seoul 07335 (KR)
(72) Inventor: YUN, Hyun Woong, Daejeon 34122 (KR); KIM, Yong Jun, Daejeon 34122 (KR); CHOI, Soon Hyung, Daejeon 34122 (KR); KIM, Tae Gon, Daejeon 34122 (KR); HAH, Hoe Jin, Daejeon 34122 (KR)
(74) Representative: Hoffmann Eitle
(86) International application number: PCT/KR2020/013286
(87) International publication number: WO 2021/066495

(56) References cited:
- EP-A1- 3 203 560
- EP-A1- 3 916 846
- EP-A1- 3 965 182
- JP-A- 2016 025 077
- JP-A- 2018 501 602
- KR-A- 20170 049 459
- KR-A- 20170 072 027
- KR-A- 20190 093 174
- US-A1- 2014 332 731

## Description

### TECHNICAL FIELD

The present invention relates to an electrode and a secondary battery including the same.

### BACKGROUND ART

Demand for batteries as an energy source has significantly increased as technology development and demand with respect to mobile devices have recently increased, and thus a variety of research on batteries capable of meeting various needs has been carried out. Particularly, as a power source for such devices, research on lithium secondary batteries having excellent life and cycle characteristics as well as high energy density has been actively conducted.

A lithium secondary battery denotes a battery in which a non-aqueous electrolyte containing lithium ions is included in a positive electrode assembly which includes a positive electrode including a positive electrode active material capable of intercalating/deintercalating the lithium ions, a negative electrode including a negative electrode active material capable of intercalating/deintercalating the lithium ions, and a microporous separator disposed between the positive electrode and the negative electrode.

Meanwhile, since conductivity of the electrode may not be secured only by the electrode active material such as a positive electrode active material or a negative electrode active material, resistance of the battery may be excessively high, and thus, the electrode typically additionally includes a conductive agent. Typically, a point-type conductive agent such as carbon black has primarily been used, and a linear conductive agent such as carbon nanotubes and carbon nanofibers has also been used to improve capacity of the battery by further improving the conductivity.

A single-walled carbon nanotube is one of the linear conductive agents, and conductivity in an electrode active material layer is improved due to its thin and elongated shape. Thus, conventionally, the single-walled carbon nanotube was completely dispersed to prepare a dispersion containing single-walled carbon nanotube units in which the single-walled carbon nanotube units are present in a single strand, an electrode slurry was then prepared through the dispersion, and an electrode active material layer was prepared through the electrode slurry. Accordingly, the single-walled carbon nanotube is present in the electrode active material layer in a unit (a single strand). However, when charge and discharge of the battery are repeated, the surface of the single-walled carbon nanotube unit is damaged or the single-walled carbon nanotube unit is broken (finally a length of 1-3 pm), and thus, there is a limitation in that it is difficult to maintain a conductive network in the electrode active material layer. Accordingly, the conductive network is blocked or reduced, and this degrades energy density and life characteristics of the battery and increases resistance of the battery.

For this, there is a method for using multi-walled carbon nanotubes in order to secure conductivity despite the surface damage of the carbon nanotube. However, the multi-walled carbon nanotubes are cut into an excessively short length during the preparation of a dispersion due to the structure which is formed by growing in a node, and thus there is a limitation to improving the conductivity of the electrode.

Therefore, there is a need for a method that a new form of a conductive agent may be introduced to reduce the resistance of the electrode, life characteristics of the battery may be improved, and a content of the conductive agent may be reduced to improve energy density of the battery.

EP 3 916 846 A1 and EP 3 965 182 A1, which are prior art under Article 54(3) EPC, disclose negative electrodes comprising a silicon-based active agent and a carbon nanotube structure in which 2-5,000 single-walled carbon nanotubes are bonded to each other.

EP 3 203 560 A1 discloses a positive electrode comprising an active material, a point-type conductive material, carbon nanotubes which have been subjected to grinding, and a binder.

### DISCLOSURE OF THE INVENTION

### TECHNICAL PROBLEM

An aspect of the present invention provides an electrode which can reduce internal resistance of a battery and which can improve energy density, output characteristics and life characteristics of the battery.

Another aspect of the present invention provides a secondary battery including the electrode.

### TECHNICAL SOLUTION

According to an aspect of the present invention, there is provided an electrode including an electrode active material layer, the electrode active material layer including an electrode active material and a conductive agent, the conductive agent including a point-type conductive agent, which is carbon black, and carbon nanotube structures in which 2 to 5,000 single-walled carbon nanotube units are bonded to each other side by side, wherein the carbon nanotube structures have an average length of 1 um to 500 µm, the carbon nanotube structures are contained in the electrode active material layer in an amount of 0.01 wt% to 5.0 wt%, and the weight ratio of the carbon black to the carbon nanotube structures is 9:1 to 1:9.

According to another aspect of the present invention, there is provided a secondary battery including the electrode.

### ADVANTAGEOUS EFFECTS

An electrode according to the present invention includes carbon nanotube structures in which 2 to 5,000 single-walled carbon nanotube units are bonded to each other, and thus a conductive network may be maintained smoothly even in the process of charging and discharging of a battery. Accordingly, resistance of the electrode may be maintained at a low level, energy density and life characteristics of the battery may be improved, and resistance of the battery may be reduced. In addition, since the carbon nanotube structures are present in the electrode in a long rope form, even though the battery is continuously charged and discharged, the decrease in conductivity due to the damage of the carbon nanotube structures can be suppressed, and a long conductive network can be formed. Moreover, since the point-type conductive agent included in the electrode contributes to the formation of a short conductive network, a conductive network may be evenly formed over the entire electrode due to using a combination of the point-type conductive agent and the carbon nanotube structures. Accordingly, life characteristics of the battery may be further improved, and a content of the conductive agent may be reduced to improve energy density of the battery and further reduce resistance of the battery. Furthermore, the point-type conductive agent may disperse, throughout the entire electrode, electrons in the electrode, and thus ignition due to a phenomenon in which electrons are localized to the carbon nanotube structures may be suppressed.

### BRIEF DESCRIPTION OF THE DRAWINGS

FIG. 1 is SEM photographs of (A) multi-walled carbon nanotube units which are used in Comparative Examples and (B) and (C) carbon nanotube structures which are used in Examples of the present invention.
FIG. 2 is TEM photographs of (A) carbon nanotube structures which are used in Examples of the present invention and (B) single-walled carbon nanotube units which are used in Comparative Examples.
FIG. 3 is SEM photographs of an electrode in Example 1 of the present invention.
FIG. 4 is SEM photographs of an electrode in Comparative Example 1 of the present invention.
FIG. 5 is SEM photographs of an electrode in Comparative Example 2 of the present invention.
FIG. 6 is SEM photographs of an electrode in Comparative Example 3 of the present invention.

### MODE FOR CARRYING OUT THE INVENTION

It will be understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

In the present specification, the expression "specific surface area" is measured by a BET method, wherein, particularly, the specific surface area may be calculated from a nitrogen gas adsorption amount at a liquid nitrogen temperature (77K) using BELSORP-mini II by Bell Japan Inc.

In the present specification, an average particle diameter (D₅₀) may be defined as a particle diameter at a cumulative volume of 50% in a particle size distribution curve. The average particle diameter (D₅₀), for example, may be measured by using a laser diffraction method. The laser diffraction method can generally measure a particle diameter ranging from a submicron level to a few mm and can obtain highly repeatable and high-resolution results.

In the present invention, a single-walled carbon nanotube unit means a tubular unit having a single wall composed of carbon atoms, and a multi-walled carbon nanotube unit means a tubular unit having multi-walls composed of carbon atoms in one tube.

Hereinafter, the present invention will be described in detail.

### Electrode

The electrode may be a positive electrode or a negative electrode. When the electrode is a positive electrode, an electrode active material layer included in the positive electrode is a positive electrode active material layer, and an electrode active material of the positive electrode active material layer is a positive electrode active material. When the electrode is a negative electrode, an electrode active material layer included in the negative electrode is a negative electrode active material layer, and an electrode active material of the negative electrode is referred to as a negative electrode active material.

The positive electrode may further include a positive electrode collector, and in this case, the positive electrode active material layer may be disposed on one surface or both surfaces of the positive electrode collector.

The positive electrode collector is not particularly limited as long as the material of the positive electrode collector has conductivity without causing adverse chemical changes in the battery, and, for example, copper, stainless steel, aluminum, nickel, titanium, an alloy thereof, the same having a surface treated with carbon, nickel, titanium, silver, or the like, sintered carbon, etc. may be used.

The positive electrode collector may typically have a thickness of 3 um to 500 µm, and microscopic irregularities may be formed on the surface of the positive electrode collector to improve the adhesion of the positive electrode active material. In addition, the positive electrode collector, for example, may be used in various shapes such as that of a film, a sheet, a foil, a net, a porous body, a foam body, a non-woven fabric body, and the like.

The positive electrode active material may be a positive electrode active material commonly used in the art, and a type thereof is not particularly limited.

For example, at least one metal such as cobalt, manganese, nickel, or aluminum, and a lithium oxide containing lithium may be used as a positive electrode active material. More particularly, the lithium oxide may include a lithium-manganese-based oxide (e.g., LiMnO₂, LiMn₂O, etc.), a lithium-cobalt-based oxide (e.g., LiCoO₂, etc.), a lithium-nickel-based oxide (e.g., LiNiO₂, etc.), a lithium-nickel-manganese-based oxide (e.g., LiNi_{1-Y1}Mn_{Y1}O₂ (where 0<Y1<1), LiNi_{Z1}Mn_{2-Z1}O₄ (where 0<Z1<2), etc.), a lithium-nickel-cobalt-based oxide (e.g., LiNi_{1-Y2}Co_{Y2}O₂ (where 0<Y2<1), etc.), a lithium-manganese-cobalt-based oxide (e.g., LiCo_{1-Y3}Mn_{Y3}O₂ (where 0<Y3<1), LiMn_{2-Z2}Co_{z2}O₄ (where 0<Z2<2), etc.), a lithium-nickel-cobalt-manganese-based oxide (e.g., Li(Ni_{P1}Co_{Q1}Mn_{R1})O₂ (where O<P1<1, 0<Q1<1, 0<R1<1, and P1+Q1+R1=1) or Li(Ni_{P2}Co_{Q2}Mn_{R2})O₄ (where 0<P2<2, 0<Q2<2, 0<R2<2, and P2+Q2+R2=2), etc.), or a lithium-nickel-cobalt-manganese-other metal (M) oxide (e.g., Li(Ni_{P3}Co_{Q3}Mn_{R3}M¹ₛ)O₂ (where M¹ is selected from the group consisting of Al, Cu, Fe, V, Cr, Ti, Zr, Zn, Ta, Nb, Mg, B, W, and Mo, and P3, Q3, R3, and S are atomic fractions of each independent elements, wherein 0<P3<1, 0<Q3<1, 0<R3<1, 0<S<1, and P3+Q3+R3+S=1), etc.), and any one thereof or a compound of two or more thereof may be included.

The positive electrode active material may be included in an amount of 70 wt% to 99.5 wt%, preferably, 80 wt% to 99 wt% based on a total weight of the positive electrode active material layer. When the amount of the positive electrode active material satisfies the above range, excellent energy density, positive electrode adhesion, and electrical conductivity may be achieved.

The negative electrode may further include a negative electrode collector, and in this case, the negative electrode active material layer may be disposed on one surface or both surfaces of the negative electrode collector.

The negative electrode collector is not particularly limited as long as the material of the negative electrode collector has conductivity without causing adverse chemical changes in the battery, and, for example, copper, stainless steel, aluminum, nickel, titanium, an alloy thereof, the same having a surface treated with carbon, nickel, titanium, silver, or the like, sintered carbon, etc. may be used.

The negative electrode collector may typically have a thickness of 3 um to 500 µm, and microscopic irregularities may be formed on the surface of the negative electrode collector to improve the adhesion of the negative electrode active material. In addition, the negative electrode collector, for example, may be used in various shapes such as that of a film, a sheet, a foil, a net, a porous body, a foam body, a non-woven fabric body, and the like.

The negative electrode active material may be a negative electrode active material commonly used in the art, and a type thereof is not particularly limited.

The negative electrode active material may be, for example, at least one selected from the group consisting of: a carbonaceous material such as artificial graphite, natural graphite, graphitized carbon fibers, and amorphous carbon; alloy powder of lithium and at least one metal selected from the group consisting of sodium, potassium, rubidium, cesium, francium, beryllium, magnesium, calcium, strontium, barium, radium, aluminum, germanium and tin; a silicon-based active material such as Si, SiOᵥ (O < v < 2); a tin-based active material such as SnO₂; a lithium titanium oxide; and lithium metal powder. In some cases, the negative electrode active material may include a carbon coating layer on the surface thereof.

The negative electrode active material may be included in an amount of 70 wt% to 99.5 wt%, and preferably, 80 wt% to 99 wt% based on a total weight of the negative electrode active material layer. When the amount of the negative electrode active material satisfies the above range, excellent energy density, electrode adhesion, and electrical conductivity may be achieved.

### (1) Point-type Conductive Agent

The point-type conductive agent serves to be disposed between the electrode active materials to thereby form a conductive path between the adjacent electrode active materials.

The point-type conductive agent may have an average particle diameter (D₅₀) of 1 nm to 500 nm, particularly 10 nm to 250 nm, and more particularly 20 nm to 200 nm. In the case in which the above range is satisfied, the conductivity of the electrode may be improved due to the high degree of graphitization of the point-type conductive agent.

The point-type conductive agent is carbon black. The carbon black may include at least one selected from the group consisting of acetylene black, ketjen black, channel black, furnace black, lamp black, and thermal black. The carbon black may be easily dispersed throughout the entire electrode to help electrons to be uniformly dispersed, thereby improving the conductivity of the electrode.

The point-type conductive agent may be contained in the electrode active material layer in an amount of 0.01 wt% to 5 wt%, particularly 0.01 wt% to 1 wt%, and more particularly 0.05 wt% to 0.5 wt%. In the case in which the above range is satisfied, the carbon black may be easily dispersed throughout the entire electrode to allow electrons to be uniformly dispersed, thereby improving the conductivity of the electrode.

### (2) Carbon Nanotube Structures

2 to 5,000 single-walled carbon nanotube units are bonded side by side to each other in the carbon nanotube structures. More specifically, in consideration of durability and conductive network of the electrode, it is preferable that 2 to 4,500, more preferably 50 to 4,000, and more preferably 1,000 to 4,000 single-walled carbon nanotube units are bonded to each other.

In the carbon nanotube structures, the single-walled carbon nanotube units are arranged side by side and bonded (cylindrical structure in which long axes of the units are bonded in parallel with each other to have flexibility). The carbon nanotube structures may be connected to each other to represent a network structure in the electrode.

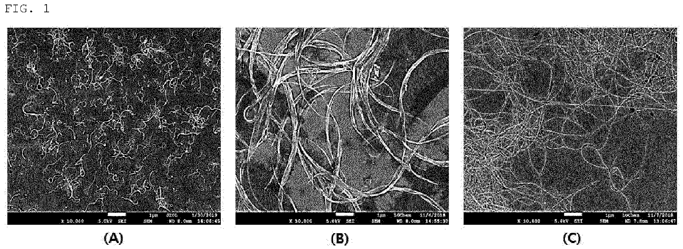

Conventional electrodes including carbon nanotubes are generally prepared by dispersing bundle-type or entangled-type carbon nanotubes (form in which single-walled carbon nanotube units or multi-walled carbon nanotube units are attached to each other or intertwined) in a dispersion medium to prepare a conductive agent dispersion and then using the conductive agent dispersion. In this case, the carbon nanotubes are completely dispersed in the conventional conductive agent dispersion to exist as a conductive agent dispersion in which carbon nanotube units in the form of a single strand are dispersed. In the conventional conductive agent dispersion, the carbon nanotube units are easily cut by an excessive dispersion process so that the carbon nanotube units have a length shorter than an initial length. Also, the carbon nanotube units may be easily cut in a rolling process of the electrode, and an additional limitation occurs in which the carbon nanotube units (particularly, single-walled carbon nanotube units) are cut or the surface thereof is damaged by an excessive volume change of the electrode active material during operation of the battery. Accordingly, since the conductivity of the electrode is deteriorated, there is a limitation in that the life characteristics of the battery is deteriorated. Furthermore, with respect to the multi-walled carbon nanotube unit, structural defects are high due to a mechanism of node growth (not a smooth linear shape, but nodes are present due to defects generated during a growth process). Thus, during the dispersion process, the multi-walled carbon nanotube units are more easily cut (see (A) of FIG. 1), and the short-cut multi-walled carbon nanotube units are likely to be aggregated with each other via π-π stacking based on the carbon surface bond structure (sp2) of the unit. Accordingly, it is difficult for the multi-walled carbon nanotube units to be more uniformly dispersed and present in an electrode slurry.

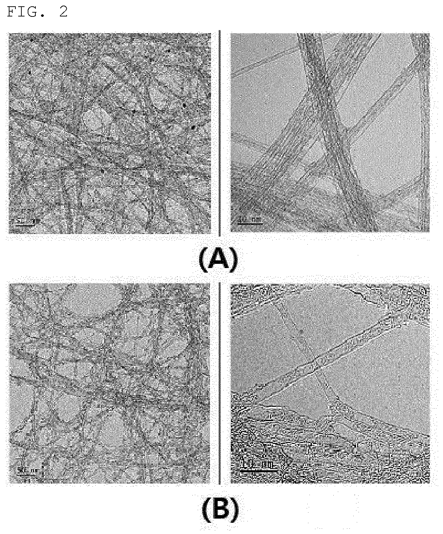

Alternatively, with respect to the carbon nanotube structures included in the electrode of the present invention, since they are in the form of ropes in which 2 to 5,000 single-walled carbon nanotube units, which maintain high crystallinity relatively without structural defects, are arranged and bonded side by side to each other (see (B) and (C) of FIG. 1, and (A) of FIG. 2), their lengths may be well maintained without being cut even by the volume change of the electrode active material, and thus, the conductivity of the electrode may be maintained. Also, since the conductivity of the electrode is increased due to high conductivity of the single-walled carbon nanotube units having high crystallinity, resistance of the electrode may be reduced, the life characteristics of the battery may be improved, and resistance of the battery may be reduced. Furthermore, since the carbon nanotube structures may be connected to each other to have a network structure in the electrode, occurrence of cracks may be prevented by suppressing the excessive volume change of the electrode active material and, simultaneously, a strong conductive network may be secured. Also, even if cracks occur in the electrode active material, since the carbon nanotube structures connect the electrode active material while crossing the crack, the conductive network may be maintained. Furthermore, since the carbon nanotube structures are not easily broken and may maintain their long shape, the conductive network may be strengthened throughout the electrode active material layer. Also, exfoliation of the electrode active material may be suppressed to significantly improve electrode adhesion. In addition, since the conductive agent content in the electrode may be reduced while securing a proper conductivity of the electrode, energy density of the battery may be improved.

In particular, in view of the combined use with the point-type conductive agent, the point-type conductive agent is primarily disposed between the electrode active materials to form a conducive path between the adjacent electrode active materials, and thus contributes to securing the conductivity of the short length. At this point, the carbon nanotube structures may contribute to securing the conductivity of the long length through a long length and a network structure. Therefore, a uniform conductive network may be formed throughout the electrode active material layer.

In the carbon nanotube structures, the single-walled carbon nanotube units may have an average diameter of 0.5 nm to 5 nm, and particularly, 1 nm to 5 nm. In the case in which the average diameter is satisfied, there is an effect of maximizing the conductivity in the electrode even with an extremely small amount of the conductive agent. The average diameter corresponds to an average value of diameters of top 100 single-walled carbon nanotube units having a large average diameter and bottom 100 single-walled carbon nanotube units when the manufactured electrode is observed by means of a TEM.

In the carbon nanotube structures, the single-walled carbon nanotube units may have an average length of 1 um to 100 um, and particularly, 5 um to 50 um. In the case in which the average length is satisfied, since a long conductive path for conductive connection between the electrode active material particles may be formed and a unique network structure may be formed, there is an effect of maximizing the conductivity in the electrode even with an extremely small amount of the conductive agent. The average length corresponds to an average value of lengths of top 100 single-walled carbon nanotube units having a long length and bottom 100 single-walled carbon nanotube units when the manufactured electrode is observed by means of a TEM.

The single-walled carbon nanotube units may have a specific surface area of 500 m²/g to 1,000 m²/g, and particularly, 600 m²/g to 800 m²/g. When the above range is satisfied, since the conductive path in the electrode may be smoothly secured due to the large specific surface area, there is an effect of maximizing the conductivity in the electrode even with an extremely small amount of the conductive agent. The specific surface area of the single-walled carbon nanotube units may be calculated from a nitrogen gas adsorption amount at a liquid nitrogen temperature (77K) using BELSORP-mini II by Bell Japan Inc.

The carbon nanotube structures may have an average diameter of 2 nm to 200 nm, particularly 5 nm to 180 nm, and more particularly 125 nm to 170 nm. When the above range is satisfied, since it is effective in forming the conductive network structure and is advantageous for the connection between the active material particles, excellent electrical conductivity may be achieved. The average diameter corresponds to an average value of diameters of top 100 carbon nanotube structures having a large diameter and bottom 100 carbon nanotube structures when the manufactured electrode is observed by means of an SEM.

The carbon nanotube structures may have an average length of 1 um to 500 um, particularly 5 um to 100 µm, and more particularly 15 um to 35 um. When the above range is satisfied, since it is effective in forming the conductive network structure and is advantageous for the connection between the electrode active material particles, excellent electrical conductivity may be achieved. The average length corresponds to an average value of lengths of top 100 carbon nanotube structures having a large average length and bottom 100 carbon nanotube structures when the prepared electrode is observed by an SEM.

The carbon nanotube structures may be contained in the electrode active material layer in an amount of 0.01 wt% to 5 wt%, particularly 0.01 wt% to 0.5 wt%, and more particularly 0.01 wt% to 0.15 wt%. When the above range is satisfied, since the conductive path of the electrode may be secured, the life characteristics of the battery may be improved while the electrode resistance is maintained at a low level. In the case in which the bundle-type carbon nanotubes are completely dispersed (as a general dispersion method, dispersion is performed so that single strands of the carbon nanotube units are separated from each other as much as possible) during the preparation of the conductive agent dispersion, the carbon nanotube structure is not formed, or, even if the carbon nanotube structure is formed unintentionally, the carbon nanotube structure is formed in a very small amount (e.g., 0.0005 wt%). That is, the above amount range may never be achieved by a general method. Since the carbon nanotube structures have a form in which 2 to 5,000 single-walled carbon nanotube units are arranged and bonded side by side to each other, the carbon nanotube structures may not be cut and well maintained in length even during a volume change of the electrode active material. Thus, the conductivity of the electrode may be maintained and the conductivity of the electrode may be smoothly secured due to the high conductivity of the single-walled carbon nanotube units. Accordingly, the life characteristics of the battery may be excellent even if the content of the carbon nanotube structures in the electrode is low.

In some cases, the single-walled carbon nanotube units may be surface-treated by an oxidation treatment or nitridation treatment in order to improve affinity with a dispersant.

The carbon nanotube structures may be present in a form which covers an area of 50% or less of the surface of the electrode active materials, particularly 30% or less, and more particularly 20% or less, for example may be present in a form which covers an area of 10% to 20%. If the carbon nanotube structures are coated to the electrode active material by a specific process, the carbon nanotube structures in the electrode active material layer may be present in a state of covering most of the surface of the electrode active material, and thus the above range cannot be satisfied. In the present invention, while the carbon nanotube structures are not bonded with the electrode active materials, an electrode slurry for preparing the electrode active material layer is formed, and thus the carbon nanotube structures may be uniformly distributed in the electrode active material layer. Therefore, since the phenomenon that most of the carbon nanotube structures cover the surface of the electrode active materials is reduced, the carbon nanotube structures may be present in a form which covers an area of 50% or less of the surface of the electrode active materials. In addition, the reason why the carbon nanotube structures can smoothly construct the conductive network in the electrode active material layer without being coated to the electrode active material layer is because conditions (e.g., mixing conditions, dispersant conditions, etc.) of preparing a dispersion containing the carbon nanotube structures are adjusted accurately, and thereby the dispersion, in which the carbon nanotube structures are well dispersed, may be used. The range above may be confirmed by means of an image analysis program such as Amazon Rekognition or IX image analyxer.

A weight ratio of the point-type conductive agent to the carbon nanotube structures is in a range of 9:1 to 1:9, particularly 8:2 to 2:8, and more particularly 7.8:2.2 to 2.2:7.8. In the case in which the above range is satisfied, output of the battery may be improved and energy density thereof may be high. In addition, this may be optimal in terms of dispersibility of the point-type conductive agent and the carbon nanotube structures.

The electrode active material layer may further include a binder. The binder is to secure adhesion between the electrode active material particles or between the electrode active material and the current collector, wherein common binders used in the art may be used, and a type thereof is not particularly limited. The binder, for example, may include polyvinylidene fluoride, a polyvinylidene fluoride-hexafluoropropylene copolymer (PVDF-co-HFP), polyvinyl alcohol, polyacrylonitrile, starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, carboxymethyl cellulose (CMC), a styrene-butadiene rubber (SBR), a fluoro rubber, or various copolymers thereof, and one alone or a mixture of two or more thereof may be used. When the binder includes the polyvinylidene fluoride, the polyvinylidene fluoride used as the binder may have a weight-average molecular weight of 800,000 g/mol or more, and particularly, 800,000 g/mol to 1,000,000 g/mol.

The binder may be included in an amount of 10 wt% or less, and preferably, 0.1 wt% to 5 wt% based on a total weight of the electrode active material layer. In the case in which the content of the binder satisfies the above range, excellent electrode adhesion may be achieved while minimizing an increase in resistance of the electrode.

The electrode active material layer may include a dispersant. The dispersant may include at least any one among polyvinylidene fluoride and carboxymethyl cellulose. The polyvinylidene fluoride and the carboxymethyl cellulose serve to help the dispersion of bundle-type or entangled-type single-walled carbon nanotubes in the conductive agent dispersion used in the manufacture of the electrode, and may be contained in the electrode as the electrode slurry is prepared in the conductive agent dispersion. The polyvinylidene fluoride may include a modified polyvinylidene fluoride having an ester group, a carboxyl group, etc. on the surface thereof, and in this case, the dispersion of the bundle-type carbon nanotubes may be further facilitated.

The polyvinylidene fluoride which may be contained as the dispersant may have a weight-average molecular weight of 100,000 g/mol to 750,000 g/mol, and particularly, 400,000 g/mol to 700,000 g/mol. When the above range is satisfied, while viscosity is low, single-walled carbon nanotube units in the carbon nanotube structure may be bonded strongly to each other, and simultaneously, the carbon nanotube structures may be dispersed uniformly in the dispersion. Accordingly, the conductivity in the electrode may be further improved.

### Method for Manufacturing Electrode

Next, a method for manufacturing an electrode of the present invention will be described.

The method for manufacturing the electrode of the present invention may include the steps of preparing a point-type conductive agent dispersion and a carbon nanotube structure dispersion (S1), and forming an electrode slurry including the point-type conductive agent dispersion, the carbon nanotube structure dispersion, and an electrode active material (S2).

### (1) Step for Preparing Point-type Conductive Agent Dispersion, and Carbon Nanotube Structure Dispersion (S1)

### 1) Preparation of Point-type Conductive Agent Dispersion

After preparing a mixed solution containing the point-type conductive agent of the above-described embodiment, a dispersion medium, and a dispersant, the point-type conductive agent dispersion may be prepared by means of a method such as a homogenizer, a bead mill, a ball mill, a basket mill, an attrition mill, a universal stirrer, a clear mixer, a spike mill, a TK mixer, and an ultrasonic dispersion. The dispersion medium and the dispersant may be the same as those used in the preparation of the single-walled carbon nanotube unit dispersion which will be described below, and thus will be described below.

### 2) Preparation of Carbon Nanotube Structure Dispersion

The preparation of the carbon nanotube unit dispersion may include the steps of preparing a mixed solution containing a dispersion medium, a dispersant, and bundle-type single-walled carbon nanotubes (a bonded body or an aggregate of single-walled carbon nanotubes) (S1-1); and dispersing the bundle-type single-walled carbon nanotubes by applying a shear force to the mixed solution to form carbon nanotube structures in which 2 to 5,000 single-walled carbon nanotube units are bonded side by side (S1-2).

In the step S1-1, the mixed solution may be prepared by adding the bundle-type single-walled carbon nanotubes and the dispersant to the dispersion medium. In the bundle-type single-walled carbon nanotube, the above-described single-walled carbon nanotube units are bonded to be present in the form of a bundle, wherein the bundle-type single-walled carbon nanotube includes usually 2 or more, substantially 500 or more, for example, 5,000 or more single-walled carbon nanotube units.

The bundle-type single-walled carbon nanotube may have a specific surface area of 500 m²/g to 1,000 m²/g, and particularly, 600 m²/g to 800 m²/g. When the above range is satisfied, since the conductive path in the electrode may be smoothly secured due to the large specific surface area, there is an effect of maximizing the conductivity in the electrode even with a very small amount of the conductive agent.

The bundle-type single-walled carbon nanotubes may be included in an amount of 0.1 wt% to 1.0 wt%, for example, 0.2 wt% to 0.5 wt% in the mixed solution. When the above range is satisfied, since the bundle-type single-walled carbon nanotubes are dispersed in an appropriate level, an appropriate level of the carbon nanotube structures may be formed, and dispersion stability may be improved.

The dispersion medium may include, for example, amide-based polar organic solvents such as dimethylformamide (DMF), diethyl formamide, dimethyl acetamide (DMAc), and N-methyl pyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; glycol ethers such as ethylene glycol mono methyl ether, diethylene glycol mono methyl ether, triethylene glycol mono methyl ether, tetra ethylene glycol mono methyl ether, ethylene glycol mono ethyl ether, diethylene glycol mono ethyl ether, triethylene glycol mono ethyl ether, tetra ethylene glycol mono ethyl ether, ethylene glycol mono butyl ether, diethylene glycol mono butyl ether, triethylene glycol mono butyl ether, or tetra ethylene glycol mono butyl ether; ketones such as acetone, methyl ethyl ketone, methylpropyl ketone, or cyclopentanone; and esters such as ethyl acetate, γ-butyl lactone, and ε-propiolactone, and any one thereof or a mixture of two or more thereof may be used, but is not limited thereto. More specifically, the dispersion medium may be N-methyl pyrrolidone (NMP).

The dispersant may include at least any one among polyvinylidene fluoride and carboxymethyl cellulose, and particularly polyvinylidene fluoride. The polyvinylidene fluoride may include a modified polyvinylidene fluoride having an ester group, a carboxyl group, etc. on the surface thereof, and in this case, the dispersion of the bundle-type carbon nanotubes may be further facilitated.

A weight ratio of the bundle-type carbon nanotubes to the dispersant in the conductive agent dispersion may be in a range of 1:0.1 to 1:7, and particularly, 1:1 to 1:6. In the case in which the above range is satisfied, since the bundle-type single-walled carbon nanotubes are dispersed in an appropriate level, an appropriate level of the carbon nanotube structures may be formed, and the dispersion stability may be improved.

A solid content in the mixed solution may be in a range of 0.1 wt% to 20 wt%, and particularly, 1 wt% to 10 wt%. In a case in which the above range is satisfied, since the bundle-type single-walled carbon nanotubes are dispersed in an appropriate level, an appropriate level of the carbon nanotube structures may be formed, and the dispersion stability may be improved. Also, the electrode slurry may have viscosity and elasticity that are suitable for an electrode preparation process, and it also contributes to an increase in the solid content of the electrode slurry.

In the step S1-2, a process for dispersing the bundle-type carbon nanotubes in the mixed solution may be performed by using a mixing device such as a homogenizer, a bead mill, a ball mill, a basket mill, an attrition mill, a universal stirrer, a clear mixer, a spike mill, a TK mixer, or an ultrasonic dispersion (sonification) equipment. Among these, a bead mill method is preferable in that the diameters of the carbon nanotube structures can be controlled, the uniform distribution of the carbon nanotube structures may be achieved, and there is an advantage in costs.

The bead mill method may be as follows. The mixed solution is added to a container containing beads, the container is rotated, and thus the bundle-type single carbon nanotubes may be dispersed.

In this case, conditions in which the bead mill method is performed are as follows.

An average diameter of the beads may be 0.5 mm to 1.5 mm, and particularly, 0.5 mm to 1.0 mm. In the case in which the range is satisfied, during the dispersing process, the carbon nanotube structures are not broken and their diameters can be appropriately controlled, and a dispersion solution having a uniform composition may be prepared.

The revolution speed of the container may be 500 RPM to 10,000 RPM, and particularly 2,000 RPM to 6,000 RPM. In the case in which the range is satisfied, during the dispersing process, the carbon nanotube structures are not broken and their diameters can be appropriately controlled, and a dispersion solution having a uniform composition may be prepared.

The time for performing the bead mill may be 0.5 hours to 2 hours, particularly, 0.5 hours to 1.5 hours, and more particularly, 0.8 hours to 1 hours. In the case in which the range is satisfied, during the dispersing process, the carbon nanotube structures are not broken and their diameters can be appropriately controlled, and a dispersion solution having a uniform composition may be prepared. The time for performing the bead mill means a total time of using the bead mill, and for example, if the bead mill is performed several times, it means the total time taken over the several times.

The bead mill conditions are for appropriately dispersing the bundle-type single-walled carbon nanotubes, and particularly, except where the bundle-type carbon single-walled nanotubes are completely dispersed into a strand of the single-walled carbon nanotubes. That is, the bead mill conditions are for appropriately dispersing the bundle-type single-walled carbon nanotubes to form the carbon nanotube structures in which 2 to 5,000 single-walled carbon nanotube units are bonded side by side to each other in the prepared conductive agent dispersion. This may be achieved only in the case where a composition of the mixed solution, the dispersion process (e.g., the bead mill process) conditions, etc. are strictly controlled.

Through the process, the carbon nanotube structures dispersion may be formed.

### (2) Step for Forming Electrode Slurry Including Point-type Conductive Agent Dispersion, Carbon Nanotube Structure Dispersion, and Electrode Active Material (S2)

Through the process as above, when the point-type conductive agent dispersion and the carbon nanotube structure dispersion are prepared, an electrode slurry including the dispersions and an electrode active material is formed. In this case, the above-described electrode active materials may be used as the electrode active material.

In addition, a binder and a solvent may be further included in the electrode slurry as needed. In this case, the binder of the above-described embodiment may be used as the binder. The solvent, for example, may include amide-based polar organic solvents such as dimethylformamide (DMF), diethyl formamide, dimethyl acetamide (DMAc), and N-methyl pyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol; polyhydric alcohols such as glycerin, trimethylolpropane, pentaerythritol, or sorbitol; glycol ethers such as ethylene glycol mono methyl ether, diethylene glycol mono methyl ether, triethylene glycol mono methyl ether, tetra ethylene glycol mono methyl ether, ethylene glycol mono ethyl ether, diethylene glycol mono ethyl ether, triethylene glycol mono ethyl ether, tetra ethylene glycol mono ethyl ether, ethylene glycol mono butyl ether, diethylene glycol mono butyl ether, triethylene glycol mono butyl ether, or tetra ethylene glycol mono butyl ether; ketones such as acetone, methyl ethyl ketone, methylpropyl ketone, or cyclopentanone; and esters such as ethyl acetate, γ-butyl lactone, and ε-propiolactone, and any one thereof or a mixture of two or more thereof may be used, but the present invention is not limited thereto. The solvent may be the same or different from the dispersion medium used in the predispersion, and may preferably be N-methyl pyrrolidone (NMP).

Next, the electrode slurry prepared as described above is dried to form an electrode active material layer. Specifically, the electrode active material layer may be formed by a method of coating the electrode slurry on an electrode collector and then drying the coated collector, or may be formed by a method of coating the electrode slurry on a separate support and then laminating, on the collector, a film separated from the support. If necessary, after the electrode active material layer is formed by the above-described method, a rolling process may be further performed. In this case, the drying and rolling may be performed under appropriate conditions in consideration of physical properties of the electrode to be finally prepared, and are not particularly limited.

### Secondary Battery

Next, a secondary battery according to another embodiment of the present invention will be described.

The secondary battery includes an electrode of the present invention as described above. In this case, the electrode may be at least one among a positive electrode and a negative electrode. Specifically, the secondary battery according to the present invention may include a positive electrode, a negative electrode, a separator disposed between the positive electrode and the negative electrode, and an electrolyte, where at least one among the positive electrode and the negative electrode is the described-above electrode of the present invention, that is, the electrode including the electrode active material layer containing the electrode active material and the carbon nanotube structures. Preferably, the electrode of the present invention may be a positive electrode. Since the electrode according to the present invention has been described above, the detailed descriptions will be omitted and only other components will be described below.

The separator separates the negative electrode and the positive electrode and provides a movement path of lithium ions, wherein any separator may be used as the separator without particular limitation as long as it is typically used in a secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer component may be used to secure heat resistance or mechanical strength, and the separator having a single layer or multilayer structure may be selectively used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but is not limited thereto.

Specifically, the electrolyte may include a non-aqueous organic solvent and a metal salt.

For example, aprotic organic solvents such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydroxy franc, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate may be used as the non-aqueous organic solvent.

In particular, ethylene carbonate and propylene carbonate, as ring-type carbonates among the carbonate-based organic solvents, well dissociate a lithium salt in the electrolyte solution due to high dielectric constants as high-viscosity organic solvents, and thus, the ring-type carbonate may be preferably used. Since an electrolyte solution having high electrical conductivity may be prepared when the ring-type carbonate is mixed with low-viscosity, low-dielectric constant linear carbonate, such as dimethyl carbonate and diethyl carbonate, in an appropriate ratio, the ring-type carbonate may be more preferably used.

A lithium salt may be used as the metal salt, and the lithium salt is a material that is readily soluble in the non-aqueous electrolyte solution, wherein, for example, one selected from the group consisting of F⁻, Cl-, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN-, and (CF₃CF₂SO₂)₂N⁻ may be used as an anion of the lithium salt.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components.

According to another embodiment of the present invention, a battery module including the secondary battery as a unit cell and a battery pack including the battery module are provided. Since the battery module and the battery pack include the secondary battery having high capacity, high rate characteristics, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, the present invention will be described in more detail with reference to specific Examples and Comparative Examples.

### Preparation Example 1: Preparation of Point-type Conductive Agent Dispersion

A carbon black (diameter: 50 nm) having a specific surface area of 240 m²/g and hydrogenated nitrile butadiene rubbers (weight-average molecular weight: 260,000 g/mol) were mixed with N-methylpyrrolidone (NMP) that is a solvent to prepare a mixture having a solid content of 16.5 wt%.

The mixture was stirred in a bead-mill method, and bundle-type carbon nanotubes were dispersed in the solvent to prepare a conductive agent dispersion. In this case, the diameter of the beads was 1 mm, the revolution speed of the agitation container containing the beads was 3,000 RPM, and the stirring was performed for 60 minutes.

In the conductive agent dispersion, an amount of the carbon black was 15 wt%, and an amount of the hydrogenated nitrile butadiene rubbers was 1.5 wt%.

### Preparation Example 2: Preparation of Carbon Nanotube Structure Dispersion

Bundle-type single-walled carbon nanotubes (having a specific surface area of 650 m²/g) composed of single-walled carbon nanotube units (having an average diameter of 1.5 nm) and polyvinylidene fluoride (PVdF, KF9700, weight-average molecular weight: 580,000 g/mol) were mixed in N-methyl pyrrolidone (NMP) that is a solvent to prepare a mixture so that a solid content was 2.4 wt%.

The mixture was stirred in a bead-mill method, and thus the bundle-type single-walled carbon nanotubes were dispersed in the solvent to prepare a carbon nanotube structure dispersion. In this case, the diameter of the beads was 1 mm, the revolution speed of the agitation container containing the beads was 3,000 RPM, and the stirring was performed for 60 minutes. The carbon nanotube structure dispersion included carbon nanotube structures having a form in which 2 to 5,000 single-walled carbon nanotube units were bonded side by side (see (A) of FIG. 2).

In the carbon nanotube structure dispersion, an amount of the carbon nanotube structures was 0.4 wt%, and an amount of the polyvinylidene fluoride was 1.0 wt%.

### Preparation Example 3: Preparation of Carbon Nanotube Structure Dispersion

In Preparation Example 2, polyvinylidene fluoride having a weight-average molecular weight of 680,000 g/mol was used instead of the polyvinylidene fluoride having a weight-average molecular weight of 580,000 g/mol to prepare a carbon nanotube structure dispersion containing carbon nanotube structures having an average length of 20 µm.

### Preparation Example 4: Preparation of Carbon Nanotube Structure Dispersion

In Preparation Example 2, polyvinylidene fluoride having a weight-average molecular weight of 480,000 g/mol was used instead of the polyvinylidene fluoride having a weight-average molecular weight of 580,000 g/mol to prepare a carbon nanotube structure dispersion containing carbon nanotube structures having an average length of 5 µm.

### Preparation Example 5: Preparation of Single-walled Carbon Nanotube Unit Dispersion

Bundle-type single-walled carbon nanotubes (having a specific surface area of 650 m²/g) composed of single-walled carbon nanotube units (having an average diameter of 1.5 nm) and hydrogenated nitrile butadiene rubbers (weight-average molecular weight: 260,000 g/mol) were mixed in N-methyl pyrrolidone (NMP) that is a solvent to prepare a mixture so that a solid content was 4.4 wt% (an amount of bundle-type carbon nanotube was 0.4 wt% and an amount of hydrogenated nitrile butadiene rubbers was 4.0 wt%).

The mixture was stirred in a bead-mill method, and thus the bundle-type single-walled carbon nanotubes were dispersed in the solvent to prepare a conductive agent dispersion. In this case, the particle diameter of the beads was 1 mm, and the revolution speed of the agitation container containing the beads was 3,000 RPM. When one cycle was performing the stirring for 60 minutes in the above conditions, the stirring was performed for a total of four cycles (60 minutes natural cooling between each cycle). Thus, a single-walled carbon nanotube unit dispersion was prepared (see (B) of FIG. 2). In the dispersion, the bundle-type single-walled carbon nanotubes were completely dispersed for the single-walled carbon nanotube units to be present in a single strand, but the above-described carbon nanotube structure was not detected. In addition, in the single-walled carbon nanotube unit dispersion, an amount of the carbon nanotube structures was 0.4 wt%, and an amount of the hydrogenated nitrile butadiene rubbers was 4.0 wt%.

### Preparation Example 6: Preparation of Multi-walled Carbon Nanotube Unit Dispersion

Bundle-type multi-walled carbon nanotubes, a hydrogenated nitrile butadiene rubber (H-NBR) as a dispersant, and N-methylpyrrolidone (NMP) as a dispersion medium were mixed at a weight ratio of 4:0.8:95.2 to form a mixture. The mixture was added to a spike mill, in which 80% was filled with beads having a diameter of 0.65 mm, dispersed, and discharged at a discharge rate of 2 kg/min. This process was performed twice, and the bundle-type multi-walled carbon nanotubes were completely dispersed to prepare a multi-walled carbon nanotube unit dispersion.

### Examples and Comparative Examples

### Example 1: Manufacture of Positive Electrode

A positive electrode slurry including, based on a solid content, 3.91 wt% of the point-type conductive of Preparation Example 1, 17.54 wt% of the carbon nanotube structure dispersion of Preparation Example 2, 68.62 wt% of LiNi_{0.6}Co_{0.2}Mn_{0.2}O₂ (NCM622), and 9.93 wt% of the binder (PVDF, weight-average molecular weight: 900,000 g/mol), and including N-methylpyrrolidone (NMP) as a solvent was prepared. The positive electrode slurry was coated on an Al thin film current collector (on both surfaces thereof) having a thickness of 20 µm, dried at 130 °C, and rolled to prepare a positive electrode including a positive electrode active material layer.

In the positive electrode active material layer, the LiNi_{0.6}Co_{0.2}Mn_{0.2}O₂ (NCM622) is contained in an amount of 97.6 wt%, the binder is contained in an amount of 1.8 wt%, the hydrogenated nitrile butadiene rubber is contained in an amount of 0.1 wt%, the point-type conductive agent is contained in an amount of 0.3 wt%, the carbon nanotube structures are contained in an amount of 0.1 wt%, and the polyvinylidene fluoride that is a dispersant is contained in an amount of 0.1 wt%.

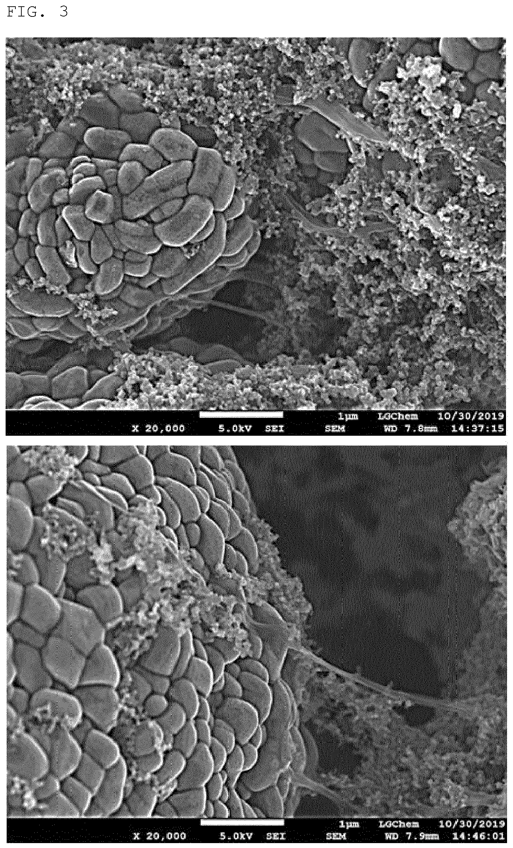

Referring to FIG. 3, it may be seen that in the positive electrode of Example 1, carbon nanotube structures in a rope form make a network structure and connect NCM622 to each other.

### Example 2: Manufacture of Positive Electrode

A positive electrode was manufactured in the same manner as in Example 1 except that the carbon nanotube structure dispersion of Preparation Example 3 was used instead of the carbon nanotube structure dispersion of Preparation Example 2 in Example 1.

### Example 3: Manufacture of Positive Electrode

A positive electrode was manufactured in the same manner as in Example 1 except that the carbon nanotube structure dispersion of Preparation Example 4 was used instead of the carbon nanotube structure dispersion of Preparation Example 2 in Example 1.

### Example 4: Manufacture of Positive Electrode

A positive electrode slurry including, 11.5 wt% of the point-type conductive of Preparation Example 1, 17.5 wt% of the carbon nanotube structure dispersion of Preparation Example 2, 1.9 wt% of LiNi_{0.6}Co_{0.2}Mn_{0.2}O₂ (NCM622), and 9.1 wt% of the binder (PVDF, weight-average molecular weight: 900,000 g/mol), and including N-methylpyrrolidone (NMP) as a solvent was prepared. The positive electrode slurry was coated on an Al thin film current collector (on both surfaces thereof) having a thickness of 20 µm, dried at 130 °C, and rolled to prepare a positive electrode including a positive electrode active material layer.

In the positive electrode active material layer, the LiNi_{0.6}Co_{0.2}Mn_{0.2}O₂ (NCM622) is contained in an amount of 97.3 wt%, the binder is contained in an amount of 1.2 wt%, the hydrogenated nitrile butadiene rubber is contained in an amount of 0.4 wt%, the point-type conductive agent is contained in an amount of 0.9 wt%, the carbon nanotube structures are contained in an amount of 0.1 wt%, and the polyvinylidene fluoride that is a dispersant is contained in an amount of 0.1 wt%.

### Comparative Example 1 Manufacture of Positive Electrode

A positive electrode was manufactured in the same manner as in Example 1 except that the carbon nanotube structure dispersion of Preparation Example 2 was not used, and the point-type conductive agent dispersion of Preparation Example 1 was used in the same amount as the carbon nanotube structure dispersion (using only the point-type conductive agent dispersion of Preparation Example 1).

### Comparative Example 2 Manufacture of Positive Electrode

A positive electrode was manufactured in the same manner as in Example 1 except that the point-type conductive agent dispersion of Preparation Example 1 was not used, and the carbon nanotube structure dispersion of Preparation Example 2 was used in the same amount as the point-type conductive agent dispersion (using only the carbon nanotube structure dispersion of Preparation Example 2).

### Comparative Example 3 Manufacture of Positive Electrode

A positive electrode was manufactured in the same manner as in Example 1 except that the single-walled carbon nanotube unit dispersion of Preparation Example 5 was used instead of the carbon nanotube structure dispersion of Preparation Example 1.

### Comparative Example 4 Manufacture of Positive Electrode

A positive electrode was manufactured in the same manner as in Example 1 except that the multi-walled carbon nanotube unit dispersion of Preparation Example 6 was used instead of the carbon nanotube structure dispersion of Preparation Example 2.

**[Table 1]**

| | Carbon black content (wt%) | Carbon nanotube structure content (wt%) | Single-walled carbon nanotube unit (in a completely dispersed form) content (wt%) | Multi-walled carbon nanotube unit content (wt%) |
|---|---|---|---|---|
| Example 1 | 0.3 | 0.1 | - | - |
| Example 2 | 0.3 | 0.1 | - | - |
| Example 3 | 0.3 | 0.1 | - | - |
| Example 4 | 0.9 | 0.1 | | |
| Comparative Example 1 | 0.4 | - | - | - |
| Comparative Example 2 | - | 0.4 | - | - |
| Comparative Example 3 | 0.3 | - | 0.1 | - |
| Comparative Example 4 | 0.3 | - | - | 0.1 |

In Example 1, 4 and Comparative Example 2 above, the carbon nanotube structures (Preparation Example 2) have an average diameter of 100 nm and an average length of 10 um. In Example 2 above, the carbon nanotube structures (Preparation Example 3) have an average diameter of 150 nm and an average length of 20 um. In Example 3 above, the carbon nanotube structures (Preparation Example 4) have an average diameter of 50 nm and an average length of 5 µm.

In Comparative Example 3 above, the single-walled carbon nanotube units (Preparation Example 5) have an average diameter of 1.5 nm and an average length of 1 µm.

In Comparative Example 4 above, the multi-walled carbon nanotube units (Preparation Example 6) have an average diameter of 300 nm and an average length of 1.5 µm.

The average diameter and the average length correspond to an average value of diameters and lengths of top 100 carbon nanotube structures (or multi-walled carbon nanotube units, or single-walled carbon nanotube units) having a large diameter (or a long length) and bottom 100 carbon nanotube structures (or multi-walled carbon nanotube units, or single-walled carbon nanotube units) when the manufactured electrodes were observed through a TEM.

### Experimental Example 1: SEM Photographs Confirmation

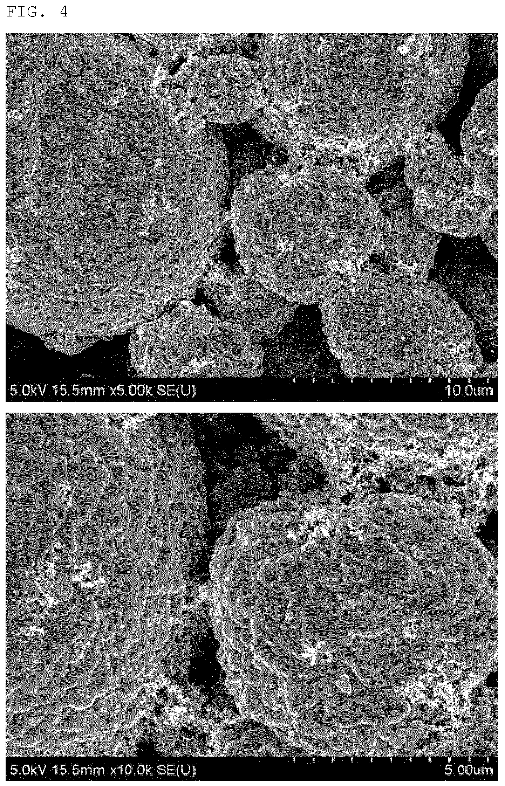

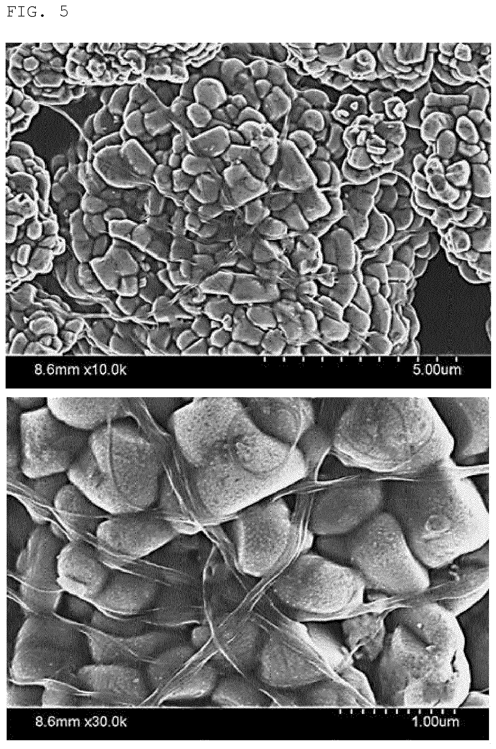

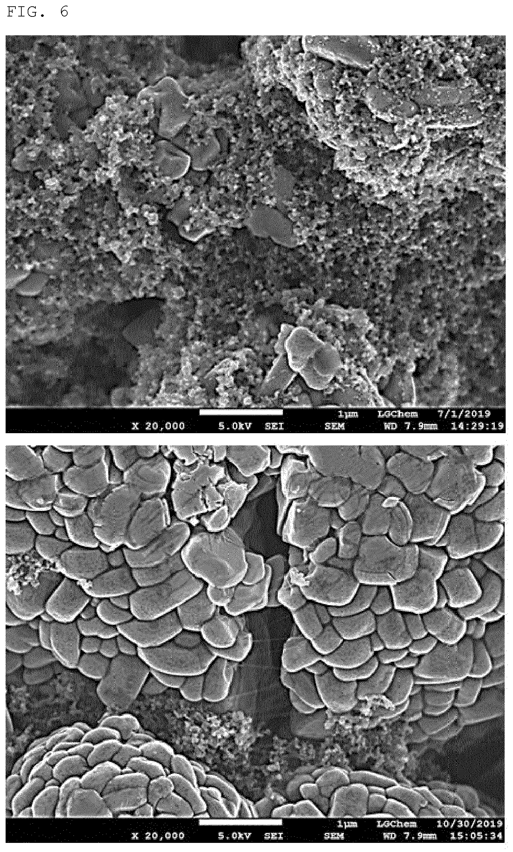

The positive electrodes of Examples 1 and Comparative Examples 1 to 3 were confirmed by means of SEM photographs. FIG. 3 is SEM photographs of the positive electrode of Example 1, FIG. 4 is SEM photographs of the positive electrode of Comparative Example 1, FIG. 5 is SEM photographs of the positive electrode of Comparative Example 2, and FIG. 6 is SEM photographs of the positive electrode of Comparative Example 3.

Referring to FIG. 3, it may be seen that in the positive electrode of Example 1, carbon nanotube structures in a rope form, in which a plurality of single-walled carbon nanotube units are bonded side by side to each other, form a network structure, and carbon black is present around the positive electrode active material and the carbon nanotube structures. Meanwhile, through an image analysis program, it was confirmed that the carbon nanotube structures cover an area of 50% or less (about 20%) of the surface of the electrode active material.

Referring to FIG. 4, in the positive electrode of Comparative Example 1, the carbon nanotube structure was not observed. Referring to FIG. 5, in the positive electrode of Comparative Example 2, the carbon black (point-type conductive agent) was not observed. Referring to FIG. 6, in the positive electrode of Comparative Example 3, it could be vaguely observed that only the single-walled carbon nanotube units were present in a single strand, but the carbon nanotube structure was not observed.

### Experimental Example 2: Evaluation of Energy Density and Capacity Retention of Battery

Batteries were respectively prepared as follows by using the positive electrodes of Examples 1 to 3 and Comparative Examples 1 to 4.

An electrode assembly was formed by using a separator, 15 of the positive electrodes, 16 negative electrodes, and two single-sided positive electrodes, which differ from the Example (or Comparative Example) only in that the positive electrode active material layer was formed only on the one surface of the current collector. The positive electrode and the negative electrode are spaced apart from each other with the separator therebetween, and the separator is located at each of the outermost parts of the electrode assembly. The negative electrode is in a form in which each lithium metal is stacked in 20 um on both sides of a 10 um-thick copper foil current collector. The separator is in a form in which Al₂O₃ and PVdF are mixed in a weight ratio of 8:2 and coated on both sides of a polyethylene layer.

Thereafter, the electrode assembly was put in a case, and an electrolyte was added. Dimethyl carbonate (DMC), in which 4M LiTFSI was dissolved, was used as the electrolyte.

Each lithium secondary battery was charged and discharged under the conditions below.
Charging condition: Constant-current charging at 0.1 C to 4.3 V
Discharging condition: Constant-current discharging at 0.1 C to 2.8 V

When the charging and discharging is one cycle, the discharge capacity after three cycles is considered an initial discharge capacity, and this is shown in Table 2.

Thereafter, the cycle, in which the charging and discharging conditions are changed as follows, was performed 50 times, and then capacity retention was evaluated, and the results are shown in Table 2.
Charging condition: Constant-current charging at 0.3 C to 4.3 V
Discharging condition: Constant-current discharging at 2 C to 2.8 V

The capacity retention means the ratio of the discharge capacity after 50 cycles when the initial discharge capacity is 100%. In addition, the energy density of the battery means a value (L) in which the product of the initial discharge capacity (Ah) and the normal voltage (V) is divided by the battery volume.

**[Table 2]**

| | Initial discharge capacity (Ah) | Energy density of battery (Wh/L) | Capacity retention (%) |
|---|---|---|---|
| Example 1 | 2.011 | 825 | 80.32 |
| Example 2 | 2.020 | 829 | 80.63 |
| Example 3 | 2.007 | 823 | 75.87 |
| Example 4 | 2.014 | 826 | 80.11 |
| Comparative Example 1 | 1.931 | 792 | 35.40 |
| Comparative Example 2 | 2.010 | 824 | 52.04 |
| Comparative Example 3 | 2.015 | 827 | 62.36 |
| Comparative Example 4 | 2.004 | 822 | 55.22 |

### Experimental Example 3: Evaluation of Output Characteristics of Battery

An electrode assembly, in which two single-sided positive electrode (others were the same as Examples and Comparative Examples, but the positive electrode active material layer was formed only on the one surface of the current collector) and one negative electrode were disposed as separator/positive electrode/separator/negative electrode/separator/positive electrode/separator, was formed. The negative electrode is in a form in which each lithium metal is stacked in 20 um on both sides of a 10 um-thick copper foil current collector. The separator is in a form in which Al₂O₃ and PVdF are mixed in a weight ratio of 8:2 and coated on both sides of a polyethylene layer.

Thereafter, the electrode assembly was put in a case, and an electrolyte was added to prepare a battery. Dimethyl carbonate (DMC), in which 4M LiTFSI was dissolved, was used as the electrolyte.

The battery was charged and discharged three times with a current of 0.33 C from 2.5 V to 4.2 V. Thereafter, after charging to 4.2 V, 50% of the last third discharge capacity was discharged. Then, after one-hour resting, a current of 2.5 C was applied to reduce a voltage, and resistance was calculated by the reduced voltage.

**[Table 3]**

| | Resistance (m ohm) | | |
|---|---|---|---|
| | 0.1s | 10s | 30s |
| Example 4 | 0.25 | 0.43 | 0.58 |
| Comparative Example 1 | 0.30 | 0.48 | 0.63 |

## Claims

1. An electrode comprising an electrode active material layer which comprises an electrode active material and a conductive agent, the conductive agent comprising
a point-type conductive agent which is carbon black, and
carbon nanotube structures in which 2 to 5,000 single-walled carbon nanotube units are bonded to each other side by side,
wherein the carbon nanotube structures have an average length of 1 um to 500 µm,
the carbon nanotube structures are contained in the electrode active material layer in an amount of 0.01 wt% to 5.0 wt%, and
the weight ratio of the carbon black to the carbon nanotube structures is 9:1 to 1:9.

2. The electrode of claim 1, wherein the weight ratio of the carbon black to the carbon nanotube structures is 8:2 to 2:8.

3. The electrode of claim 1, wherein the carbon black is contained in the electrode active material layer in an amount of 0.01 wt% to 5 wt%.

4. The electrode of claim 1, wherein the carbon nanotube structures are connected to each other to form a network structure in the electrode.

5. The electrode of claim 1, wherein the carbon nanotube structures have an average diameter of 2 nm to 200 nm.

6. The electrode of claim 1, wherein the carbon nanotube structures have an average diameter of 125 nm to 170 nm.

7. The electrode of claim 1, wherein, in the carbon nanotube structures, the single-walled carbon nanotube units have an average diameter of 0.5 nm to 5 nm.

8. The electrode of claim 1, wherein the carbon black has an average particle diameter (D₅₀) of 1 nm to 500 nm.

9. The electrode of claim 1, wherein the carbon nanotube structures are carbon nanotube structures in which 50 to 4,000 single-walled carbon nanotube units are bonded to each other side by side.

10. The electrode of claim 1, wherein the carbon nanotube structures cover an area of 50% or less of the surface of the electrode active material, as determined by scanning electron microscopy.

11. A secondary battery comprising an electrode as defined in any of claims 1 to 10.

## Patentansprüche

1. Elektrode umfassend eine Elektroden-Aktivmaterial-Schicht, die umfasst ein Elektroden-Aktivmaterial und ein leitfähiges Mittel, das leitfähige Mittel umfassend
ein punktförmiges leitfähiges Mittel, das Ruß ist, und
Kohlenstoff-Nanoröhrchen-Strukturen, in denen 2 bis 5.000 einwandige Kohlenstoff-Nanoröhrchen-Einheiten Seite an Seite aneinander gebunden sind,
wobei die Kohlenstoff-Nanoröhrchen-Strukturen eine durchschnittliche Länge von 1 µm bis 500 µm aufweisen,
die Kohlenstoff-Nanoröhrchen-Strukturen sind in der Elektroden-Aktivmaterial-Schicht in einer Menge von 0,01 Gew.-% bis 5,0 Gew.-% enthalten, und
das Gewichtsverhältnis des Rußes zu den Kohlenstoff-Nanoröhrchen-Strukturen ist 9:1 bis 1:9.

2. Elektrode gemäß Anspruch 1, wobei das Gewichtsverhältnis des Rußes zu den Kohlenstoff-Nanoröhrchen-Strukturen 8:2 bis 2:8 ist.

3. Elektrode gemäß Anspruch 1, wobei der Ruß in der Elektroden-Aktivmaterial-Schicht in einer Menge von 0,01 Gew.-% bis 5 Gew.-% enthalten ist.

4. Elektrode gemäß Anspruch 1, wobei die Kohlenstoff-Nanoröhrchen-Strukturen miteinander verbunden sind, um eine Netzwerkstruktur in der Elektrode zu bilden.

5. Elektrode gemäß Anspruch 1, wobei die Kohlenstoff-Nanoröhrchen-Strukturen einen durchschnittlichen Durchmesser von 2 nm bis 200 nm aufweisen.

6. Elektrode gemäß Anspruch 1, wobei die Kohlenstoff-Nanoröhrchen-Strukturen einen durchschnittlichen Durchmesser von 125 nm bis 170 nm aufweisen.

7. Elektrode gemäß Anspruch 1, wobei in den Kohlenstoff-Nanoröhrchen-Strukturen, die einwandige Kohlenstoff-Nanoröhrchen-Einheiten einen durchschnittlichen Durchmesser von 0,5 nm bis 5 nm aufweisen.

8. Elektrode gemäß Anspruch 1, wobei der Ruß einen durchschnittlichen Partikeldurchmesser (D₅₀) von 1 nm bis 500 nm aufweist.

9. Elektrode gemäß Anspruch 1, wobei die Kohlenstoff-Nanoröhrchen-Strukturen, Kohlenstoff-Nanoröhrchen-Strukturen sind, in denen 50 bis 4.000 einwandige Kohlenstoff-Nanoröhrchen-Einheiten Seite an Seite aneinander gebunden sind.

10. Elektrode gemäß Anspruch 1, wobei die Kohlenstoff-Nanoröhrchen-Strukturen eine Fläche von 50% oder weniger der Oberfläche des Elektroden-Aktivmaterials bedecken, wie durch Rasterelektronenmikroskopie bestimmt.

11. Sekundärbatterie umfassend eine Elektrode gemäß mindestens einem der Ansprüche 1 bis 10.

## Revendications

1. Électrode comprenant une couche de matériau actif d'électrode qui comprend un matériau actif d'électrode et un agent conducteur, l'agent conducteur comprenant
un agent conducteur de type point qui est du noir de carbone, et
des structures de nanotubes de carbone dans lesquelles 2 à 5 000 unités de nanotubes de carbone à paroi unique sont liées les unes aux autres côte à côte,
dans laquelle les structures de nanotubes de carbone présentent une longueur moyenne de 1 µm à 500 µm,
les structures de nanotubes de carbone sont contenues dans la couche de matériau actif d'électrode en une quantité de 0,01 % en poids à 5,0 % en poids, et
le rapport en poids du noir de carbone aux structures de nanotubes de carbone est de 9:1 à 1:9.

2. Électrode selon la revendication 1, dans laquelle le rapport en poids du noir de carbone aux structures de nanotubes de carbone est de 8:2 à 2:8.

3. Électrode selon la revendication 1, dans laquelle le noir de carbone est contenu dans la couche de matériau actif d'électrode en une quantité de 0,01 % en poids à 5 % en poids.

4. Électrode selon la revendication 1, dans laquelle les structures de nanotubes de carbone sont reliées les unes aux autres pour former une structure réticulaire dans l'électrode.

5. Électrode selon la revendication 1, dans laquelle les structures de nanotubes de carbone présentent un diamètre moyen de 2 nm à 200 nm.

6. Électrode selon la revendication 1, dans laquelle les structures de nanotubes de carbone présentent un diamètre moyen de 125 nm à 170 nm.

7. Électrode selon la revendication 1, dans laquelle, dans les structures de nanotubes de carbone, les unités de nanotubes de carbone à paroi unique présentent un diamètre moyen de 0,5 nm à 5 nm.

8. Électrode selon la revendication 1, dans laquelle le noir de carbone présente un diamètre moyen de particule (D₅₀) de 1 nm à 500 nm.

9. Électrode selon la revendication 1, dans laquelle les structures de nanotubes de carbone sont des structures de nanotubes de carbone dans lesquelles 50 à 4 000 unités de nanotubes de carbone à paroi unique sont liées les unes aux autres côte à côte.

10. Électrode selon la revendication 1, dans laquelle les structures de nanotubes de carbone couvrent une aire de 50 % ou moins de la surface du matériau actif d'électrode, tel que déterminé par microscopie électronique à balayage.

11. Batterie secondaire comprenant une électrode selon l'une quelconque des revendications 1 à 10.
